# EUROPÄISCHE PATENTANMELDUNG

(11) **EP 1 403 130 A2**
(43) Veröffentlichungstag der Anmeldung: **31.03.2004**
(21) Anmeldenummer: 03019247.0
(22) Anmeldetag: 26.08.2003
(51) Int. Cl.: B60L 7/10

(54) **Mobile Arbeitsmaschine**

(30) Priorität: 26.09.2002 DE 10244769
(71) Anmelder: STILL GMBH, D-22113 Hamburg (DE)
(72) Erfinder: Leifert, Torsten, Dr., 21360 Vögelsen (DE)
(74) Vertreter: Lang, Michael

(57) **Zusammenfassung**

Die Erfindung betrifft eine mobile Arbeitsmaschine, insbesondere Flurförderzeug, mit mindestens zwei elektrischen Antrieben (4,5) mindestens einer elektrischen Steuerung (14) und mindestens einer elektrischen Spannungsquelle (1), bei der beim Abbremsen mindestens eines der elektrischen Antriebe (4) entstehende überflüssige elektrische Energie mindestens einem anderen elektrischen Antrieb (5) zugeführt wird.

## Beschreibung

Die Erfindung betrifft eine mobile Arbeitsmaschine, insbesondere Flurförderzeug, mit mindestens zwei elektrischen Antrieben, mindestens einer elektrischen Steuerung und mindestens einer elektrischen Spannungsquelle.

Beim Abbremsen eines elektrischen Antriebs, beispielsweise des Fahrantriebs, einer mobilen Arbeitsmaschine wirkt dieser elektrische Antrieb wie ein Generator und wandelt die Bewegungsenergie in elektrische Energie um. Wird als Energiequelle eine Batterie verwendet, so kann diese mit dieser Energie wieder aufgeladen werden. Da der Batterie zuvor die Energie zum Betrieb des elektrischen Antrieb entnommen wurde, reicht im Allgemeinen die Ladungskapazität der Batterie aus, um die beim Abbremsen frei werdende Energie aufzunehmen. Wird als Energiequelle jedoch beispielsweise eine Wärmekraftmaschine mit angeschlossenem Generator oder ein Brennstoffzellenystem verwendet, so ist diese Möglichkeit nicht gegeben und die elektrische Energie muss anderweitig aufgenommen werden. Neben der direkten Umwandlung der elektrischen Energie in Wärme besteht noch die Möglichkeit, einen elektrischen Zwischenspeicher damit aufzuladen, beispielsweise einen Kondensator mit hoher Kapazität. Werden solche Zwischenspeicher hinreichend groß ausgelegt, um beispielsweise auch bei einer längeren Bergabfahrt der mobilen Arbeitsmaschine genügend Energie aufnehmen zu können und so die Bremswirkung sicherzustellen, sind diese jedoch kostspielig und benötigen viel Platz in der mobilen Arbeitsmaschine. Reicht die Kapazität des Zwischenspeichers nicht für alle zu erwartenden Betriebszustände aus, so ist ein zusätzlicher Bremswiderstand vorzusehen, der ebenfalls Platz benötigt und aufwändig gekühlt werden muss.

Der Erfindung liegt daher die Aufgabe zugrunde, eine mobile Arbeitsmaschine, insbesondere Flurförderzeug, mit mindestens zwei elektrischen Antrieben zur Verfügung zu stellen, die die beim Abbremsen eines der elektrischen Antriebe freiwerdende elektrische Energie mit möglichst geringem Aufwand sicher ableitet.

Diese Aufgabe wird erfindungsgemäß dadurch gelöst, dass beim Abbremsen mindestens eines der elektrischen Antriebe entstehende überflüssige elektrische Energie mindestens einem anderen elektrischen Antrieb zugeführt wird. Dadurch kann überschüssige Energie in einem bereits vorhandenen System abgebaut werden und zusätzlich zu installierende Bremswiderstände oder elektrische Zwischenspeicher können entfallen oder in ihrer Kapazität deutlich verringert werden.

Zweckmäßigerweise steht der abzubremsende elektrische Antrieb mit einem elektrischen Energiespeicher zur Aufnahme der Bremsenergie in Wirkverbindung. Dadurch kann Energie bei kurzfristigen Bremsvorgängen in dem elektrischen Energiespeicher aufgenommen werden und steht danach für die elektrischen Antriebe wieder zur Verfügung.

Vorteilhafterweise wird der elektrische Energiespeicher von dem abzubremsenden elektrischen Antrieb nur mit der Menge Energie aufgeladen, die von dem zur Aufnahme der elektrischen Energie vorgesehenen Antrieb nicht für dessen normalen Betrieb benötigt wird. Dadurch wird bei einem Bremsvorgang der zur Aufnahme der elektrischen Energie vorgesehenen Antrieb bevorzugt versorgt, wenn dieser gerade Energie benötigt.

Besonders vorteilhaft ist es, wenn der zur Aufnahme der elektrischen Energie vorgesehene Antrieb, wenn dieser nicht bereits in Betrieb ist, nur bei vollständig aufgeladenem elektrischen Energiespeicher zur Aufnahme von Energie aktiviert wird. Dadurch wird der zweite elektrische Antrieb, wenn dieser keine Energie für den Betrieb benötigt, nur bei langzeitigem Bremsen beansprucht.

Es ist von besonderem Vorteil, wenn der zur Aufnahme der elektrischen Energie vorgesehene Antrieb mit einem Hydrauliksystem, insbesondere einer Hydraulikpumpe, in Wirkverbindung steht. Dadurch kann die von dem Antrieb aufgenommene Energie an das Hydrauliksystem weitergegeben werden.

Es ist weiterhin von Vorteil, wenn in dem Hydrauliksystem von dem zur Aufnahme der elektrischen Energie vorgesehenen Antrieb eingebrachte Energie mittels eines Druckbegrenzungsventils in Wärmeenergie umgewandelt wird. Da solche Ventile in Hydraulikkreisen zumeist schon vorhanden sind, ist eine einfache und effektive Ableitung von Bremsenergie möglich.

Vorteilhafterweise wird in dem Hydrauliksystem von dem zur Aufnahme der elektrischen Energie vorgesehenen Antrieb eingebrachte Energie mittels einer hydrodynamischen Bremsvorrichtung in Wärmeenergie umgewandelt. Dadurch werden auch große Energiemengen verschleißarm und effektiv abgeleitet.

Es ist zweckmäßig, wenn als Spannungsquelle für den Betrieb der elektrischen Antriebe mindestens ein Brennstoffzellensystem verwendet wird. Diese Systeme bieten einen hohen Wirkungsgrad bei geringem Schadstoffausstoß.

Es ist weiterhin zweckmäßig, wenn als Spannungsquelle für den Betrieb der elektrischen Antriebe mindestens eine Wärmekraftmaschine, insbesondere ein Verbrennungsmotor, mit angeschlossenem Generator verwendet wird. Diese Systeme sind einfach herzustellen und zu unterhalten.

Weitere Vorteile und Einzelheiten der Erfindung werden anhand des in den schematischen Figuren dargestellten Ausführungsbeispiels näher erläutert. Dabei zeigt
- Figur 1: ein Schaltbild für eine mobile Arbeitsmaschine nach dem Stand der Technik,
- Figur 2: ein Schaltbild für eine erfindungsgemäße mobile Arbeitsmaschine,
- Figur 3: ein Schaltbild für eine erfindungsgemäße mobile Arbeitsmaschine mit einer hydrodynamischen Bremse und einem elektrischen Energiespeicher.

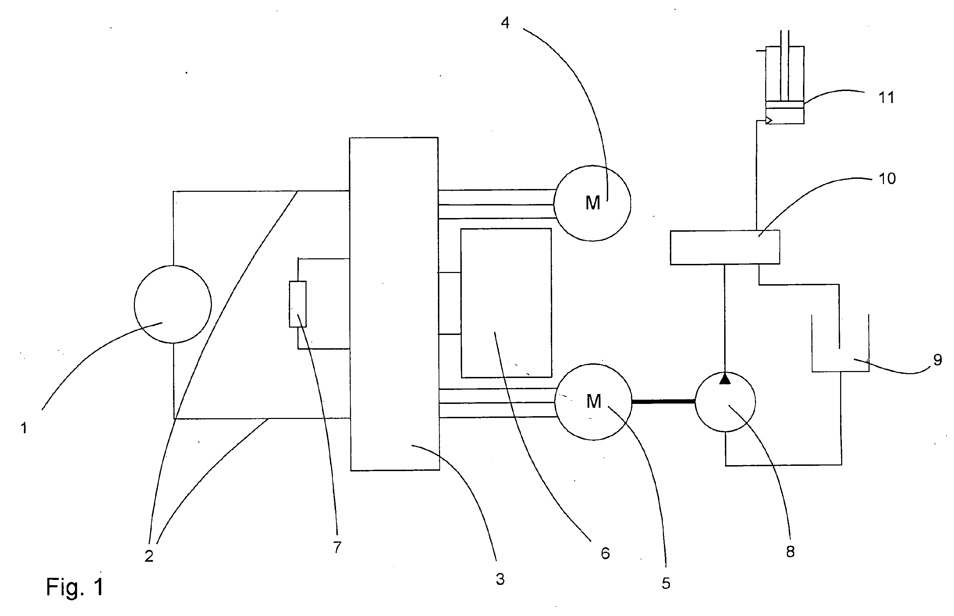

In Figur 1 ist ein schematisches Schaltbild für eine mobile Arbeitsmaschine nach dem Stand der Technik gezeigt. Von der Spannungsquelle 1 führen Zuleitungen 2 zu einer elektrischen Steuerung 3. An die Steuerung 3 sind zwei Motoren 4,5 sowie ein elektrischer Energiespeicher 6 und ein Bremswiderstand 7 angeschlossen. Der Motor 4 dient'als Fahrantrieb der mobilen Arbeitsmaschine. Der Motor 5 treibt eine hydraulische Pumpe 8 eines Hydraulikkreises an. Diese Pumpe fördert die Hydraulikflüssigkeit von einem Behälter 9 zu einem Steuerventilblock 10. Über den Steuerventilblock 10 wird die Versorgung hydraulischer Verbraucher geregelt. lm vorliegenden Ausführungsbeispiel sind diese durch den Zylinder 11 repräsentiert. Hydraulikflüssigkeit, die nicht den Verbrauchern zugeführt wird, wird über ein, im vorliegenden Fall im Steuerventilblock 10 integriertes, Druckminderungsventil an den Behälter 9 abgeleitet.

Wird die mobile Arbeitsmaschine über den Motor 4 abgebremst, liefert dieser im Generatorbetrieb Strom an die Steuerung 3, die diesen an den elektrischen Energiespeicher 6 oder den Bremswiderstand 7 weiterleitet. Ist der elektrische Energiespeicher 6 vollständig aufgeladen, kann die Energie nur noch über den Bremswiderstand 7 abgebaut werden, der diese in Wärme umsetzt und daher ausreichend gekühlt werden muss.

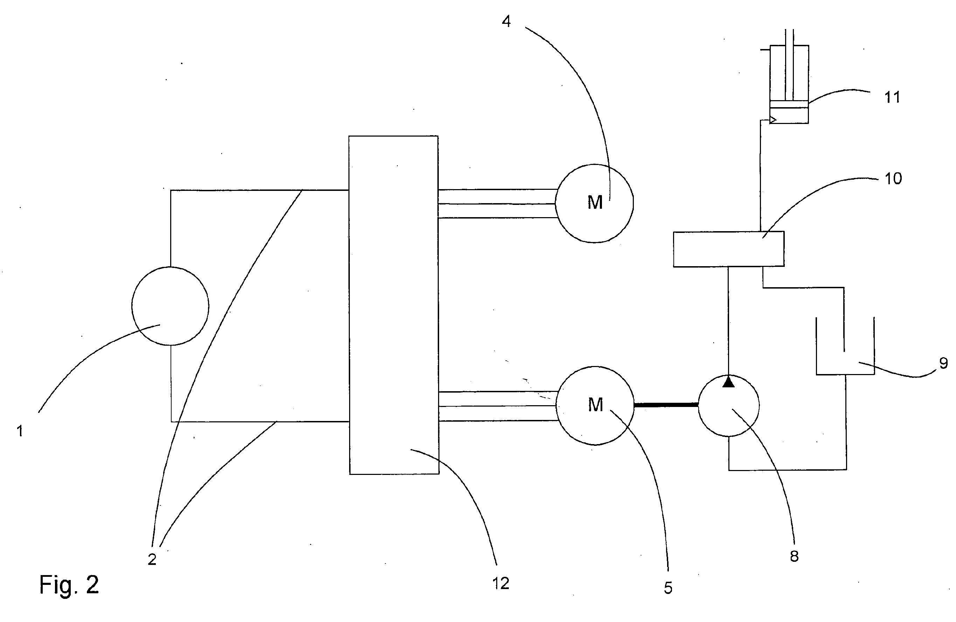

In Figur 2 ist ein schematisches Schaltbild für eine erfindungsgemäße mobile Arbeitsmaschine in einer besonders einfachen Ausführung dargestellt. Für die in Figur 1 bereits aufgeführten Komponenten wurde in Figur 2 bei prinzipiell identischer Ausführung die gleiche Nummerierung verwendet. Für abweichende Komponenten mit ähnlicher Funktion, wie der erfindungsgemäßen elektrischen Steuerung 12, wurde eine neue Nummerierung verwendet.

Die Spannungsquelle 1 versorgt die mobile Arbeitsmaschine, insbesondere die Steuerung 12, mit elektrischer Energie. Als Spannungsquelle 1 können die für mobile Arbeitsmaschinen üblichen Quellen mit ihren spezifischen Vorteilen verwendet werden. Verbrennungsmotoren beispielsweise sind einfache und robuste Energiequellen, während Brennstoffzellen einen hohen Wirkungsgrad und günstiges Abgasverhalten aufweisen und eine Versorgung aus dem Stromnetz über Kabel praktisch unbegrenzte Betriebsdauer bietet.

Die Steuerung 12 kann, wie im dargestellten Fall, als einteilige Ausführung beide Motoren 4, 5 ansteuern, es sind aber auch separate Steuerungen für die einzelnen Motoren 4, 5 möglich, die räumlich getrennt angeordnet sind und, möglicherweise über eine dritte Steuerungseinheit, miteinander in Wirkverbindung stehen. Als Motoren werden die für mobile Arbeitsmaschinen üblichen Ausführungen, beispielsweise für den Betrieb mit Gleichstrom, Wechselstrom oder Drehstrom, verwendet. Die Befehle zur Ansteuerung des Fahrmotors 4 erhält die Steuerung 12 vorzugsweise von hier nicht dargestellten Bedienelementen, wie einem Fahrpedal, oder einer elektronischen Steuerung, während der Motor 5 vorzugsweise in Abhängigkeit vom Betriebszustand; insbesondere dem Flüssigkeitsdruck des Hydraulikkreises angesteuert wird.

Wird die mobile Arbeitsmaschine über den Motor 4 abgebremst, liefert dieser nach dem Generatorprinzip Strom an die Steuerung 12, die diesen an den Motor 5 weiterleitet. Insbesondere bei der Verwendung von Brennstoffzellensystemen als Spannungsquelle 1 verhindert die Steuerung 12 zudem, dass Strom an die Spannungsquelle 1 geliefert wird. Die vom Motor 5 angetriebene hydraulische Pumpe fördert die Hydraulikflüssigkeit zum Steuerventilblock 10. Über diesen wird der Zustrom der Hydraulikflüssigkeit zu den hydraulischen Verbrauchern geregelt. Im vorliegenden Ausführungsbeispiel sind diese durch den Zylinder 11 repräsentiert, es kann sich dabei beispielsweise bei einem Flurförderzeug um Hub- und Neigezylinder eines Hubmastes oder eine hydraulische Lenkbetätigung handeln. Die Betätigung der Steuerventile für die einzelnen Verbraucher im Steuerventilblock 10 kann direkt von einer Bedienperson oder auch über elektronische Steuerungen vorgenommen werden. Liefert die Hydraulikpumpe 8 mehr Hydraulikflüssigkeit als von den Verbrauchern 11 benötigt wird, wie dies auch bei einem Bremsvorgang häufig der Fall sein wird, so wird die überschüssige Flüssigkeit über ein Druckminderungsventil in den Behälter 9 geleitet und so die Energie abgebaut. Das Druckminderungsventil ist im vorliegenden Fall im Steuerventilblock 10 integriert, kann aber auch als separates Bauteil ausgeführt werden kann.

In dem gezeigten Ausführungsbeispiel kann so auf einen Speicher zur Aufnahme elektrischer Energie wie auch auf Bremswiderstände vollständig verzichtet werden. Der Einbauraum für die Aufnahme dieser Aggregate kann so anderweitig genutzt werden und der Aufwand für deren Wartung wie auch, besonders bei Bremswiderständen, für deren Kühlung entfällt vollständig, so dass ein möglichst einfacher Aufbau des Flurförderzeugs erreicht wird.

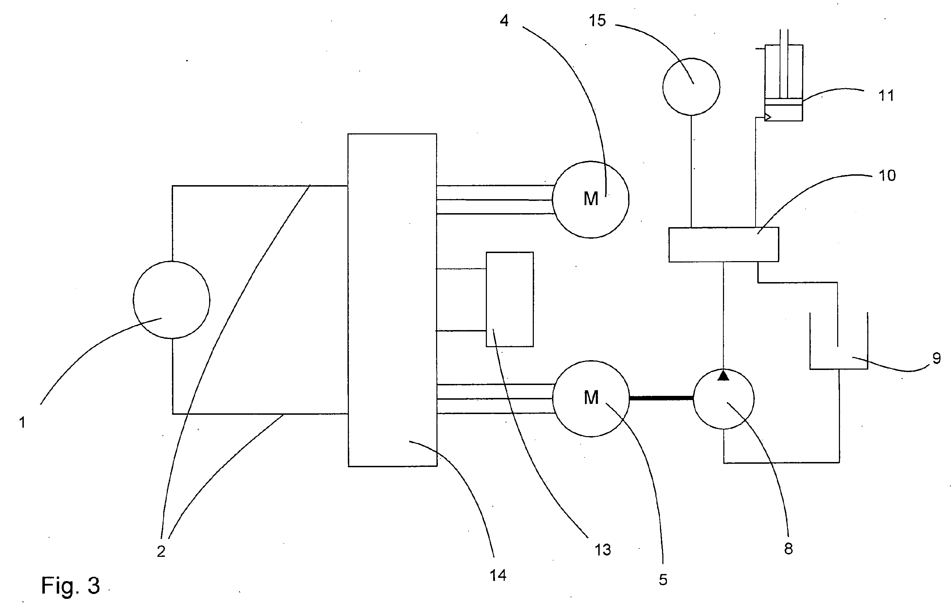

In Figur 3 ist ein Schaltbild für eine erfindungsgemäße mobile Arbeitsmaschine mit einer hydrodynamischen Bremse und einem elektrischen Energiespeicher dargestellt. Neben den in Figur 2 bereits aufgeführten, prinzipiell identischen Komponenten, die in Figur 3 mit gleicher Nummerierung versehen sind, ist hier noch ein elektrischer Energiespeicher 13 gezeigt, der mit der elektrischen Steuerung 14 in elektrischer Verbindung steht, sowie eine hydrodynamische Bremsvorrichtung (Retarder) 15.

Wird die mobile Arbeitsmaschine abgebremst und der Motor 4 liefert Strom an die Steuerung 14, so leitet die Steuerung 14 diesen, sofern die hydraulischen Verbraucher gerade keine Leistung benötigen, vorzugsweise zunächst an den elektrischen Energiespeicher 13. Dabei wird es sich bevorzugt um einen oder mehrere Kondensatoren großer Kapazität handeln, da diese gegenüber Batterien ein besonders schnelles Laden ermöglichen. Durch das bevorzugte Laden des elektrischen Energiespeichers 13 steht die beim Bremsen erzeugte elektrische Energie für die Motoren 4,5 bei emeuter Beanspruchung wieder zur Verfügung, während sie bei einer Umsetzung in Wärme für den Betrieb der mobilen Arbeitsmaschine verloren geht. Dadurch wird der Energieverbrauch der mobilen Arbeitsmaschine gegenüber einer Ausführung ohne elektrischen Energiespeicher 13, wie sie in Figur 2 dargestellt ist, gesenkt. Benötigt der Motor 5 während des Bremsvorgangs dagegen gerade Energie, da beispielsweise gleichzeitig der hydraulische Zylinder 11 betätigt wird, so wird die beim Bremsen am Motor 4 erzeugte Energie vorzugsweise direkt an den Motor 5 geliefert.

Die Entladung des Energiespeichers 13 kann bei erneutem Energiebedarf der Motoren 4,5 ebenfalls bevorzugt gegenüber der Bereitstellung aus der Spannungsquelle 1 erfolgen, um für den nächsten Bremsvorgang wieder genügend Kapazität in dem Speicher 13 zur Verfügung zu stellen. Die Steuerung des Ladezustandes des elektrischen Energiespeichers 13 ist sinnvollerweise auf das Anforderungsprofil der mobilen Arbeitsmaschine abgestimmt. So kann auch ein Mindestladezustand des elektrischen Energiespeichers während des Normalbetriebs erwünscht sein, um über den elektrischen Energiespeicher 13 Lastspitzen abzudecken und dadurch eine Spannungsquelle 1 geringerer Dauerleistung installieren zu können.

Ist der elektrische Energiespeicher 13 nicht mehr in der Lage, weitere Energie aufzunehmen oder ist dies aus anderen Gründen nicht gewünscht, so wird eine Abgabe der Energie über den Hydraulikkreis vorgenommen werden. Dies kann alleine über die hydraulische Bremsvorrichtung 15, alleine über das Druckminderungsventil oder über beide Möglichkeiten zugleich erfolgen. Zumeist wird die Vorgehensweise von der umzusetzenden Energiemenge abhängen: Ein Abbau über beide Wege wird vorzugsweise bei besonders großen Energiemengen gewählt werden, während bei mittleren Energiemengen üblicherweise die hydraulische Bremsvorrichtung 15 die Energie nahezu vollständig aufnehmen wird und bei sehr geringer Bremsleistung ein Abbau einzig über das Druckminderungsventil von Vorteil sein kann.

Das hier gezeigte Ausführungsbeispiel ist insbesondere geeignet für mobile Arbeitsmaschinen mit höheren Leistungsanforderungen, also bei schweren oder schnell fahrenden Maschinen, bei denen der Abbau der Energie über ein Druckminderungsventil alleine nicht vollständig gewährleistet werden kann, da mittels der hydrodynamischen Bremsvorrichtung 15 effektiv und verschleißarm große Energiemengen abgebaut werden.

Als weitere Ausführungsvariante ist unter anderem auch der alleinige Abbau der in das Hydrauliksystem eingebrachten Energie über die hydrodynamische Bremse denkbar. Auch Ausführungsformen mit hydrodynamischer Bremse, aber ohne elektrischen Energiespeicher oder ohne hydrodynamische Bremse, aber mit elektrischem Energiespeicher sind möglich.

## Patentansprüche

1. Mobile Arbeitsmaschine, insbesondere Flurförderzeug, mit mindestens zwei elektrischen Antrieben (4,5) mindestens einer elektrischen Steuerung (14) und mindestens einer elektrischen Spannungsquelle (1), **dadurch gekennzeichnet, dass** beim Abbremsen mindestens eines der elektrischen Antriebe (4) entstehende überflüssige elektrische Energie mindestens einem anderen elektrischen Antrieb (5) zugeführt wird.

2. Mobile Arbeitsmaschine nach Anspruch 1, **dadurch gekennzeichnet, dass** der abzubremsende elektrische Antrieb (4) mit einem elektrischen Energiespeicher (13), insbesondere Kondensator großer Kapazität, zur Aufnahme der Bremsenergie in Wirkverbindung steht.

3. Mobile Arbeitsmaschine nach Anspruch 1 oder 2, **dadurch gekennzeichnet, dass** der elektrische Energiespeicher (13) von dem abzubremsenden elektrischen Antrieb (4) nur mit der Menge Energie aufgeladen wird, die von dem zur Aufnahme der elektrischen Energie vorgesehenen Antrieb (5) nicht für dessen normalen Betrieb benötigt wird.

4. Mobile Arbeitsmaschine nach einem der Ansprüche 1 bis 3, **dadurch gekennzeichnet, dass** der zur Aufnahme der elektrischen Energie vorgesehene Antrieb (4), wenn dieser nicht bereits in Betrieb ist, nur bei vollständig aufgeladenem elektrischen Energiespeicher (13) zur Aufnahme von Energie aktiviert wird.

5. Mobile Arbeitsmaschine nach einem der Ansprüche 1 bis 4, **dadurch gekennzeichnet, dass** der zur Aufnahme der elektrischen Energie vorgesehene Antrieb (5) mit einem Hydrauliksystem, insbesondere einer Hydraulikpumpe (8), in Wirkverbindung steht.

6. Mobile Arbeitsmaschine nach einem der Ansprüche 1 bis 5, **dadurch gekennzeichnet, dass** in dem Hydrauliksystem von dem zur Aufnahme der elektrischen Energie vorgesehenen Antrieb (5) eingebrachte Energie mittels eines Druckbegrenzungsventils in Wärmeenergie umgewandelt wird.

7. Mobile Arbeitsmaschine nach einem der Ansprüche 1 bis 6, **dadurch gekennzeichnet, dass** in dem Hydrauliksystem von dem zur Aufnahme der elektrischen Energie vorgesehenen Antrieb (5) eingebrachte Energie mittels einer hydrodynamischen Bremsvorrichtung (15) in Wärmeenergie umgewandelt wird.

8. Mobile Arbeitsmaschine nach einem der Ansprüche 1 bis 7, **dadurch gekennzeichnet, dass** als Spannungsquelle (1) für den Betrieb der elektrischen Antriebe (4,5) mindestens ein Brennstoffzellensystem verwendet wird.

9. Mobile Arbeitsmaschine nach einem der Ansprüche 1 bis 8, **dadurch gekennzeichnet, dass** als Spannungsquelle (1) für den Betrieb der elektrischen Antriebe (4,5) mindestens eine Wärmekraftmaschine, insbesondere ein Verbrennungsmotor, mit angeschlossenem Generator verwendet wird.
